# EUROPEAN PATENT APPLICATION

(11) **EP 2 963 328 A1**
(43) Date of publication of application: **06.01.2016**
(21) Application number: 14756472.8
(22) Date of filing: 24.02.2014
(51) Int. Cl.: F16L 59/06, C08J 9/24, E04B 1/80

(54) **HEAT INSULATING MATERIAL AND PRODUCTION METHOD FOR SAME**

(30) Priority: 28.02.2013 JP 2013040052
(71) Applicant: Panasonic Intellectual Property Management Co., Ltd., Osaka-shi, Osaka 540-6207 (JP)
(72) Inventor: IKOMA, Yoshimitsu, Osaka-shi, Osaka 540-6207 (JP); ANDO, Hideyuki, Osaka-shi, Osaka 540-6207 (JP); KUGIMIYA, Kazuma, Osaka-shi, Osaka 540-6207 (JP); SHIBATA, Tetsuji, Osaka-shi, Osaka 540-6207 (JP); HOSOI, Kenta, Osaka-shi, Osaka 540-6207 (JP); HIDAKA, Yasuhiro, Osaka-shi, Osaka 540-6207 (JP)
(74) Representative: Müller-Boré & Partner Patentanwälte PartG mbB
(86) International application number: PCT/JP2014/000941
(87) International publication number: WO 2014/132605

(57) **Abstract**

The objective of the present invention is to provide a thermal insulator which is higher in strength and is excellent in a thermal insulating property. The present invention relates to a thermal insulator **10** formed by bonding a plurality of aerogel particles **1** with at least one adhesive portion **2.** Surfaces of the plurality of aerogel particles **1** are hydrophobic. The surfaces of the plurality of aerogel particles 1 are treated with a surfactant. The at least one adhesive portion **2** includes a branching structure section that extends over surfaces of at least three of the plurality of aerogel particles.

## Description

### TECHNICAL FIELD

The present invention relates to a thermal insulator including aerogel particles, and a method for producing the same.

### BACKGROUND ART

There has been proposed a thermal insulator including aerogel particles (refer to Patent Literatures 1 and 2). Such a thermal insulator is molded into a desired shape by bonding a plurality of aerogel particles with adhesive (binder).

### CITATION LIST

### PATENT LITERATURE

Patent Literature 1: JP 2012-525290 A
Patent Literature 2: JP H10-147664 A

### SUMMARY OF INVENTION

### TECHNICAL PROBLEM

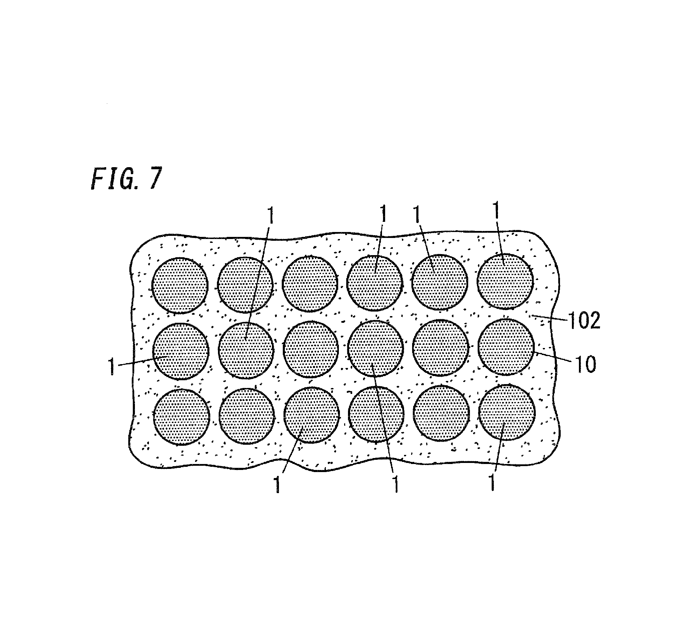

However, since the aerogel particles themselves are brittle, a product of a thermal insulator formed by molding the aerogel particles has a poor strength and is liable to crack and be broken. To increase the strength of the thermal insulator, it may be possible to increase the amount of adhesive, but in this case, the increased amount of adhesive possibly causes decrease in the thermal insulating properties of the thermal insulator. In detail, as shown in FIG. 7, if the amount of the adhesive is increased, entire surfaces of the aerogel particles 1 would be covered with the adhesive 102, and also the space between adjacent aerogel particles 1 and 1 would be filled with the adhesive 102. Thus, the adhesive 102 facilitates heat conduction between front and rear surfaces of the thermal insulator 10, which would deteriorate the thermal insulating properties of the thermal insulator 10.

In view of the above circumstances, there is a demand of the thermal insulator that achieves both requirements of sufficient strength and thermal insulating properties by increasing the strength thereof while preventing a decrease in thermal insulating properties.

The present invention has been made in view of the above circumstances, and an object thereof is to propose a thermal insulator which is higher in strength and is excellent in thermal insulating properties, and a method for producing the same.

### SOLUTION TO PROBLEM

A thermal insulator according to the present invention is a thermal insulator formed by bonding a plurality of aerogel particles with at least one adhesive portion. Surfaces of the plurality of aerogel particles are hydrophobic. The surfaces of the plurality of aerogel particles are treated with a surfactant. The at least one adhesive portion has a branching structure section that extends over surfaces of at least three of the plurality of aerogel particles.

A method for producing a thermal insulator according to the present invention is a method for producing same by bonding a plurality of aerogel particles with at least one adhesive portion. In the method, surfaces of the plurality of aerogel particles are hydrophobic, adhesive for forming the at least one adhesive portion is powder and includes thermosetting resin, and a solubility parameter of the adhesive in a molten state is equal to or more than 11. The method includes: mixing the plurality of aerogel particles, the adhesive and a surfactant; and thereafter curing the adhesive so that the plurality of aerogel particles are bonded with the at least one adhesive portion.

In the method, preferably, an average particle size of the plurality of aerogel particles is equal to or more than 100 µm.

In the method, preferably, the surfactant is fixed to the surfaces of the plurality of aerogel particles.

In the method, preferably, 5 to 40 parts by mass of the adhesive is added per 100 parts by mass of the plurality of aerogel particles.

### ADVANTAGEOUS EFFECTS OF INVENTION

In the present invention, the thermal insulator is formed by bonding the plurality of aerogel particles with at least one adhesive portion in a branched shape, thus the plurality of aerogel particles can be strongly bonded to each other compared to when the plurality of aerogel particles are bonded with particles of adhesive, and it is therefore possible to increase the strength of the thermal insulator. Moreover, occurrence of thermal bridges is more suppressed than when entire surfaces of the aerogel particles are covered, and therefore the thermal insulator according to the present invention is excellent in thermal insulating properties.

### BRIEF DESCRIPTION OF DRAWINGS

FIGS. 1A and 1B illustrate an example of an embodiment according to the present invention, FIG. 1A is a schematic view illustrating the whole structure of the embodiment, and FIG. 1B is an enlarged schematic view illustrating part of the structure of the embodiment.
FIGS. 2A to 2C are schematic views illustrating an example of an aerogel particle.
FIG. 3 is an electron micrograph of an aerogel particle.
FIG. 4 is a schematic view illustrating an example of a method for producing according to the present invention.
FIGS. 5A to 5D are sectional views illustrating an example of a method for producing according to the present invention.
FIG. 6A is an X-ray CT (computed tomography) image of a thermal insulator according to Example 1, FIG. 6B is an X-ray CT image of a thermal insulator according to Comparative Example 1, and FIG. 6C is an X-ray CT image of a thermal insulator according to Comparative Example 2.
FIG. 7 is a sectional view illustrating a conventional example.

### DESCRIPTION OF EMBODIMENTS

Embodiments of the present invention will hereinafter be described.

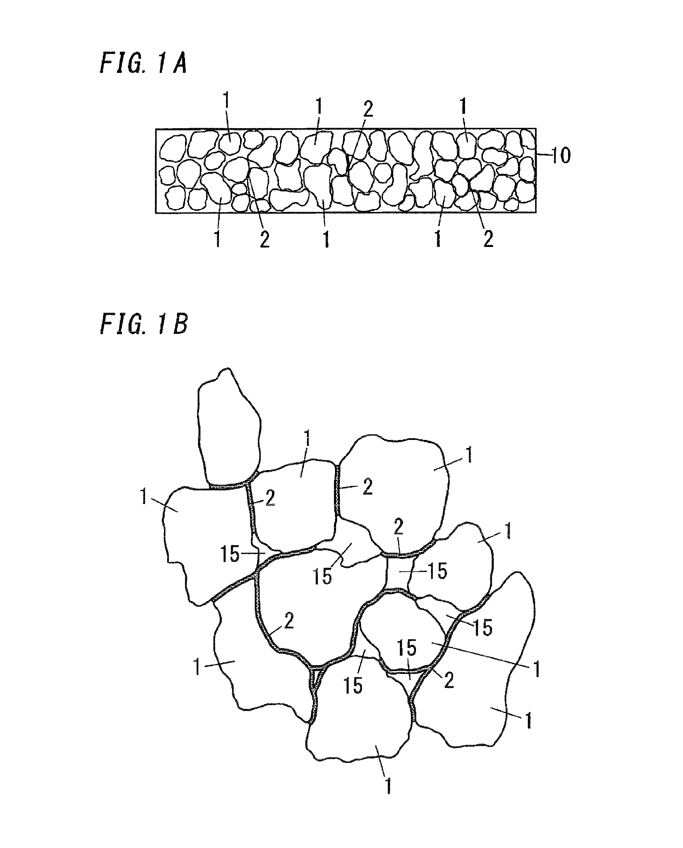

As shown in FIGS. 1A and 1B, a thermal insulator **10** according to one embodiment is formed by bonding a plurality of aerogel particles **1** with at least one adhesive portion **2.** Surfaces of the plurality of aerogel particles **1** are hydrophobic. The surfaces of the plurality of aerogel particles **1** are treated with a surfactant. The at least one adhesive portion **2** has a branching structure section that extends over surfaces of at least three of the plurality of aerogel particles **1.**

Aerogel is a porous material (porous body) and is obtained by drying a gel so as to substitute the solvent included in the gel for a gas. Particulate material of the aerogel is called aerogel particle. Known examples of the aerogel include silica aerogel, carbon aerogel, and alumina aerogel, and the silica aerogel is preferably used among them. The silica aerogel is excellent in thermal insulating properties, is easy to produce, and is low in producing cost, and thus is easy to obtain compared to other kind of aerogels. Note that, materials which are produced as a result of full evaporation of solvent in gel and have mesh structures with air gaps may be called "xerogel", but the aerogel of the present specification may include the xerogel.

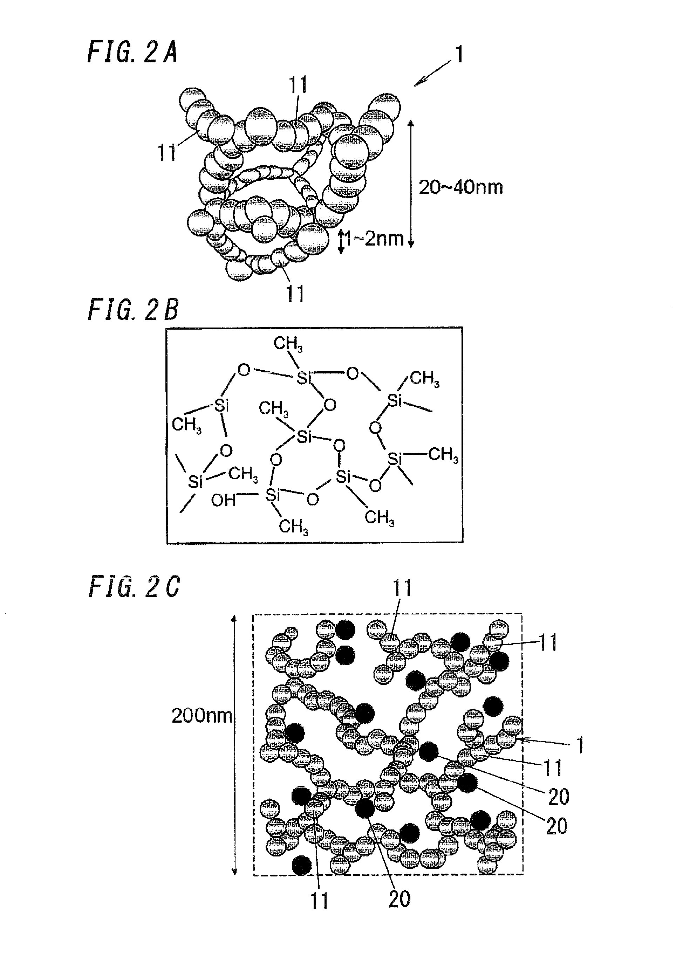

FIGS. 2A to 2C show schematic views of an example of the aerogel particle. As shown in FIGS. 2A and 2B, the aerogel particle **1** is a silica aerogel particle, and is a silica (SiO₂) structure having pores of which size being about 10s nanometers (in a range of 20 to 40 nm, for example). Such aerogel particles **1** can be obtained by a supercritical drying or the like. An aerogel particle **1** is constituted by fine particles **11** (silica microparticles) that are bound to each other so as to form a three dimensional mesh shape. Size of one silica microparticle is, for example, about 1 to 2 nm. As shown in FIG. 2C, gases **20** are allowed to enter the pores, of which sizes are about 10s nanometers, of the aerogel particle **1.** These pores block the transfer of the components of the air such as nitrogen and oxygen, and accordingly it is possible to reduce the thermal conductivities to the extent less than that of the air. For example, a conventional thermal insulator provided with the air has a thermal conductivity (WLF) λ of 35 to 45 mW/m·K, but a thermal conductivity (WLF) λ of a thermal insulator can be reduced to about **9** to **12** mW/ m·K by the aerogel particles. Typically, aerogel particles **1** have hydrophobic properties. For example, in the silica aerogel particle shown in FIG. 2B, most of silicon atoms (Si) are bound to alkyl group(s) (methyl group(s): CH₃) through oxygen atom(s) (O), and a small number of them are bound to hydroxyl group(s) (OH). This silica aerogel particle therefore has a comparatively low surface polarity.

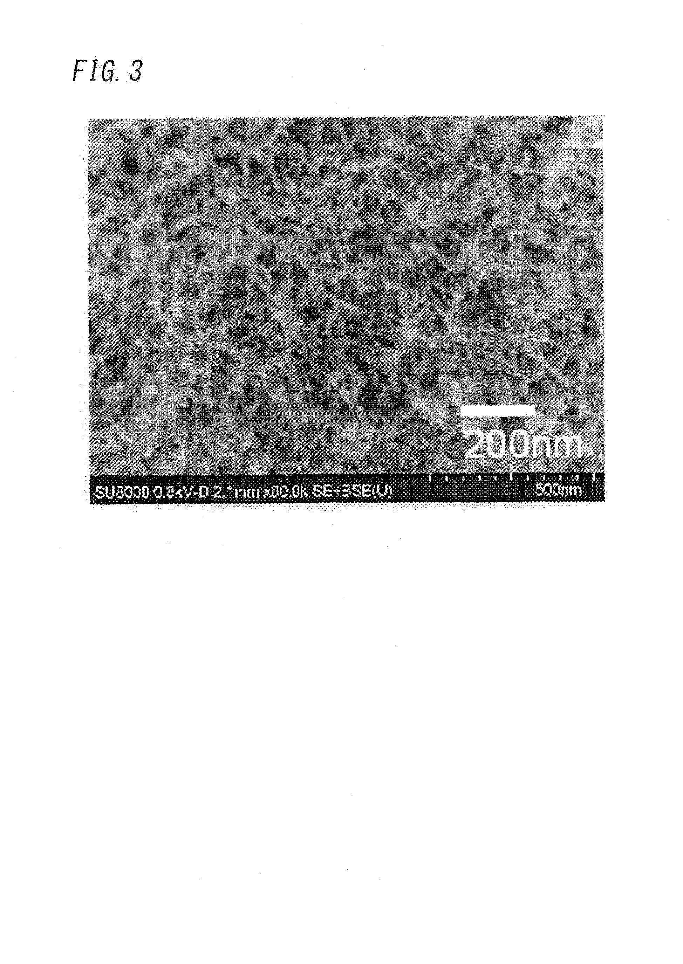

FIG. 3 is an electron micrograph of a silica aerogel particle. This silica aerogel particle was obtained by a supercritical drying method. It can also be understood from this graph that a silica aerogel particle has a three-dimensional steric mesh structure. The mesh structure of an aerogel particle 1 is typically formed of linearly bound silica microparticles having a size of less than 10 nm. Note that, the mesh structure may have ambiguous boundaries between microparticles, and some part of the mesh structure may be formed of linearly extended silica structures (-O-Si-O-).

The aerogel particles for the thermal insulator are not limited particularly, and it is possible to use the aerogel particles obtained by a commonly-used producing method. Typical examples of the aerogel particles include: aerogel particles obtained by the supercritical drying method; and aerogel particles obtained based on liquid glass.

The aerogel particles obtained by the supercritical drying method can be obtained by: preparing silica particles by polymerizing raw material by the sol-gel method which is a liquid phase reaction method; and removing the solvent thereof by the supercritical drying. For example, alkoxysilane (which is also called "silicon alkoxide" or "alkyl silicate") is used as the raw material. The alkoxysilane is hydrolyzed under presence of solvent to generate a wet gelled compound having silica skeleton as a result of condensation polymerization, and thereafter the wet gelled compound is dried under supercritical condition in which a temperature and a pressure are equal to or more than those of a critical point of the solvent. The solvent may be alcohol, liquefied carbon dioxide or the like. According to the drying of the gel compound under the supercritical condition, the solvent thereof is removed while the mesh structure of the gel is maintained, and as a result the aerogel can be obtained. Aerogel particles, which are particulate materials of the aerogel, can be obtained by pulverizing the solvent-including gel into particles, and thereafter drying the particles of the solvent-including gel by the supercritical drying. Alternatively, aerogel particles can be obtained by pulverizing a bulk body of aerogel obtained as a result of the supercritical drying.

The alkoxysilane as the raw material of the aerogel particles is not limited particularly, but may be bifunctional axkoxysilane, trifunctional axkoxysilane, tetrafunctional axkoxysilane, or a combination of them. Examples of the bifunctional alkoxysilane include dimethyldimethoxysilane, dimethyldiethoxysilane, diphenyldiethoxysilane, diphenyldimethoxysilane, methylphenyldiethoxysilane, methylphenyldimethoxysilane, diethyldiethoxysilane, and diethyldimethoxysilane. Examples of the trifunctional alkoxysilane include methyltrimethoxysilane, methyltriethoxysilane, ethyltrimethoxysilane, ethyltriethoxysilane, phenyltrimethoxysilane, and phenyltriethoxysilane. Examples of the tetrafunctional alkoxysilane include tetramethoxysilane, and tetraethoxysilane. Bis(trimethylsilyl)methane, bis(trimethylsilyl)ethane, bis(trimethylsilyl)hexane, or vinyltrimethoxysilane may be used as the alkoxysilane. Partial hydrolysate of the alkoxysilane may be used as the raw material of aerogel particles.

The hydrolysis and the condensation polymerization of the alkoxysilane are preferably performed under presence of water, and more preferably performed under presence of a mixed liquid of water and organic solvent which the alkoxysilane is soluble in and is compatible with water. Use of such a mixed liquid as the solvent makes it possible to perform the hydrolysis process and the condensation polymerization process in succession, and accordingly the gel can be obtained efficiently. In this process, the polymer is generated as a gelled substance (wet gel) exists in the solvent as dispersion medium. The solvent which the alkoxysilane is soluble in and is compatible with water is not limited particularly. Examples of such a solvent include: alcohol such as methanol, ethanol, propanol, isopropanol and butanol; acetone; and N,N-dimethylformamide. These materials may be used alone or in combination.

It is also preferable that the hydrolysis and the condensation polymerization of the alkoxysilane be performed under presence of catalyst which causes to desorb the alkoxy group from the alkoxysilane to facilitate the condensation reaction. Examples of such a catalyst include acidic catalyst and basic catalyst. Specifically, examples of the acidic catalyst include hydrochloric acid, citric acid, nitric acid, sulfuric acid, and ammonium fluoride. Examples of the basic catalyst include ammonia and piperidine.

An appropriate component may be added to the reaction solution of the alkoxysilane. Examples of such a component may include a surface-activating agent and a functional group induction agent. Such an additional component can provide a favorable function on the aerogel particles.

The aerogel can be obtained by drying the obtained wet gel by the supercritical drying. It is preferable that the wet gel be firstly cut or pulverized into particles to prepare the particles of the solvent including-gel, and thereafter the particles of the gel be dried by the supercritical drying. By doing so, the aerogel can be made into particles and dried without fracturing aerogel structure, and accordingly aerogel particles can be obtained easily. In this case, it is preferable to prepare the particles of gel in uniform size, and which enables the aerogel particles to be equalized in size. Alternatively, the aerogel particles may be obtained by preparing a bulk aerogel, and thereafter pulverizing the bulk body of aerogel by a pulverizing device. The obtained aerogel particles may be sieved or classified so as to give aerogel particles with more equal sizes. When sizes of aerogel particles are equalized, handleability can be improved and it is possible to easily obtain a stable product.

The aerogel particles obtained based on the liquid glass can be produced by an ordinary pressure drying method that includes sequential processes of a preparation process of silica sol, a gelling process of the silica sol, a ripening process, a pulverizing process of the gel, a solvent substitution process, a hydrophobizing process and a drying process. The liquid glass generally may be a high concentration aqueous solution of mineral silicate such as sodium silicate, and can be obtained by dissolving the mineral silicate in the water and heating it, for example.

The raw material of the silica sol may be silicate alkoxide, silicate of alkaline metal, or the like. Examples of the silicate alkoxide include tetramethoxysilane and tetraethoxysilane. The alkoxysilane described in the explanation regarding the supercritical drying method can be used as the silicate alkoxide. The silicate of alkaline metal may be potassium silicate, sodium silicate or the like. It is preferable to use the silicate of alkaline metal because it is inexpensive, and it is more preferable to use the sodium silicate because it is easily available.

In a case of using the silicate of alkaline metal, silica sol can be prepared by a method using a deacidification with an inorganic acid such as hydrochloric acid and sulfuric acid, or a method using a cation exchange resin having counter ion of H⁺. Among these methods, it is preferable to use a cation exchange resin.

The silica sol can be prepared by using an acid type cation exchange resin by passing a solution of silicate of alkaline metal having a proper concentration through a packed layer filled with the cation exchange resin. Alternatively, the silica sol can be prepared by: introducing a cation exchange resin into a solution of silicate of alkaline metal; mixing them; removing the alkaline metal; and thereafter removing the cation exchange resin by, for example, filtering. The amount of the cation exchange resin is preferably no less than an amount required to exchange the alkaline metal included in the solvent. The solvent is subject to dealkalization (demetallation) by the cation exchange resin.

The acid type cation exchange resin may be styrene-based, acrylic-based one, or methacryl-based, and have a replaced sulfonic acid group or carboxyl group as the ion-exchange group, for example. Among them, it is preferable to use, so-called strong acid type cation exchange resin provided with the sulfonic acid group. The cation exchange resin used for the exchange of the alkaline metal can be reused after regeneration process by passing sulfuric acid or hydrochloric acid therethrough.

The prepared silica sol is thereafter gelled, and then which is ripened. In the gelling process and the ripening process, it is preferable to control the pH thereof. Typically, the silica sol after the ion exchange process by the cation exchange resin has a comparatively low pH of, for example, 3 or less. When such a silica sol is neutralized so that the pH thereof is in a pH range of mild acidity to neutrality, the silica sol is gelled. The silica sol can be gelled by controlling the pH thereof into a range of 5.0 to 5.8, and preferably into a range of 5.3 to 5.7. The pH thereof can be controlled by adding base and/or acid. The base may be aqueous ammonia, sodium hydroxide, potassium hydroxide, silicate of alkaline metal, or the like. The acid may be hydrochloric acid, citric acid, nitric acid, sulfuric acid, or the like. The pH-controlled gel is ripened in a stable state. The ripening process may be performed under a temperature in a range of 40 to 80°C for a time period of 4 to 24 hour.

After the ripening process, preferably, the gel is pulverized. Desired aerogel particles can be easily obtained by the pulverization of the gel. The pulverizing process of the gel can be performed, for example, by: putting the gel in a Henshall type mixer or gelling the sol inside the mixer; and operating the mixer at a proper rotating speed for a proper period.

After the pulverizing process, preferably, the solvent substitution process is performed. In the solvent substitution process, the solvent (such as water) used for preparing the gel is substituted for another solvent having small surface tension in order to avoid the occurrence of drying shrinkage when the gel is dried. The solvent substitution process typically includes multiple steps, and preferably, two steps, because it is difficult to directly substitute water for the solvent having small surface tension. A criterion for selecting a solvent used for the first step may include: having good affinity with both water and a solvent used for the second step. The solvent used for the first step may be methanol, ethanol, isopropyl alcohol, acetone or the like, and ethanol is preferable. A criterion for selecting a solvent used for the second step may include: having less reactivity with a treatment agent used in a following hydrophobizing process; and having small surface tension so as to cause less drying shrinkage. The solvent used for the second step may be hexane, dichloromethane, methyl ethyl ketone or the like, and hexane is preferable. An additional solvent substitution step may be performed between the first solvent substitution step and the second solvent substitution step, as needed.

After the solvent substitution process, preferably, the hydrophobizing process is performed. Alkylalkoxysilane, halogenated alkylsilane, or the like can be used for a treatment agent in the hydrophobizing process. For example, dialkyldichlorosilane or monoalkyl trichlorosilane can be used preferably, and dimethildichlorosilane is used more preferably in view of the reactivity and the material cost. The hydrophobizing process may be performed before the solvent substitution process.

After the hydrophobizing process, the obtained gel is isolated from the solvent by filtering, and thereafter the gel is washed to remove the unreacted treatment agent. Thereafter, the gel is dried. The drying process may be performed under the ordinary pressure, and may be performed with heat and/or hot air. The drying process is preferably performed under an inert gas (e.g., nitrogen gas) atmosphere. According to this process, the solvent in the gel is removed from the gel, and thus the aerogel particles can be obtained.

The aerogel particles obtained by the supercritical drying method and the aerogel particles obtained based on the liquid glass have basically the same structure. That is, each of them has a particle structure in which silica microparticles are bound together so as to form a three dimensional mesh shape.

The shape of the aerogel particle is not particularly limited, and may be one of various shapes. Typically, the aerogel particles obtained by the above-mentioned method have indeterminate shapes because the pulverizing process or the like is conducted to obtain particles. The aerogel particles may be, so to say, in a rock-shape having irregular surface. Alternatively, the aerogel particles may be in a spherical-shape, a rugby-ball shape, a panel-shape, a flake-shape, a fiber-shape, or the like. If the aerogel particles are used as material for molding, the aerogel particles may have different particle sizes. In molded products aerogel fine particles are integrated by being bonded to each other, and therefore the aerogel particles are not necessarily have a uniform size. Regarding a size of an aerogel particle, a maximum length of the particle may fall within a range of 50 nm to 10 mm. In view of strength, ease for treatment, and ease for molding, it is preferable that excessively large particles and excessively small particles be small in number. For example, the aerogel particles 1 may be such micron-order particles that a maximum length of the aerogel particles 1 may fall within a range of equal to or more than 1 µm and less than 2 mm, which is preferably large in number. The average particle size of the aerogel particles **1** preferably falls within a range of 100 µm to 5 mm, and, more preferably, falls within a range of 500 µm to 1.5 mm. It is possible to avoid an excessive amount of adhesive and surfactant by using such the aerogel particles **1** having the average particle size that falls within the range described above, which makes it less likely to cause reduction in thermal insulating properties of thermal insulator.

The thermal insulator of the present invention is formed by bonding the aforementioned aerogel particles with the adhesive portions.

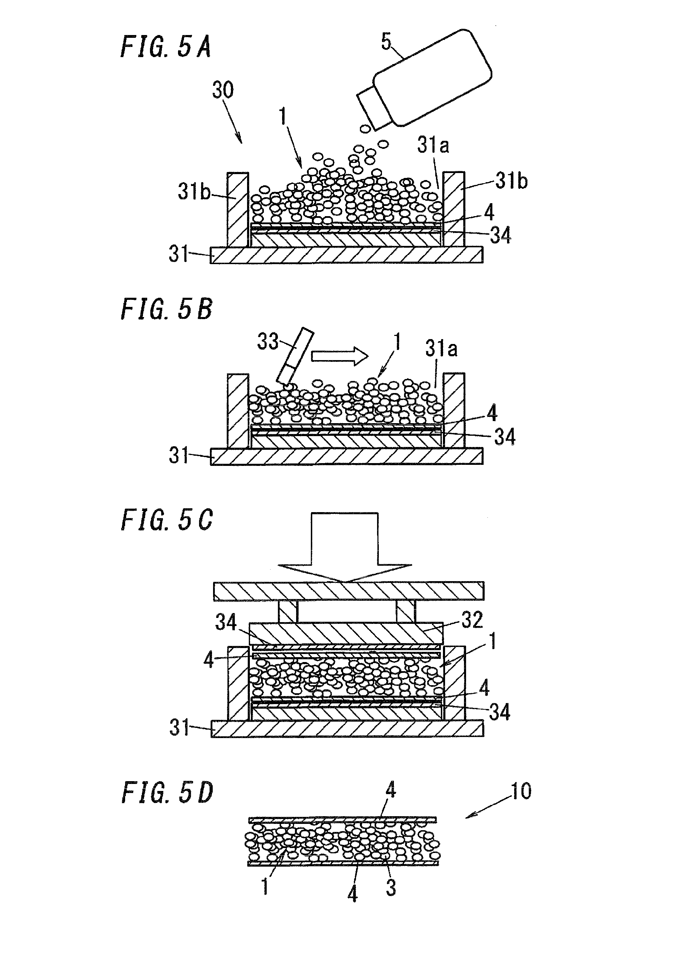

FIG. 5D shows an example of a thermal insulator in an embodiment according to the present invention. The thermal insulator **10** is constituted by a molding product of the aerogel particles **1** (called aerogel layer 3) and surface sheets **4.** In this aspect, the thermal insulator **10** is formed as a board-like thermal insulator (thermal insulating board). Note that, by molding with a proper molding tool or the like, the thermal insulator 10 can be formed into a shape other than a board shape. The thermal insulator **10** has a structure in which the surfaces sheets **4** are respectively placed on opposite surfaces of the aerogel layer **3** formed of bonded aerogel particles **1.** By covering the aerogel layer **3** with the surface sheet **4,** it is possible to increase the strength of the thermal insulator **10.** A surface sheet **4** may be placed on only one of opposite surfaces of an aerogel layer **3,** but it is preferable that the surface sheets **4** are placed on the respective opposite surfaces of the aerogel layer **3** to increase the strength. Note that, the surface sheet **4** is optional, and may be omitted. A shape of the thermal insulator **10** is, preferably, a board-like shape in view of easy application to a building material, but is not limited thereto. The thermal insulator 10 can be formed into a desired shape in accordance with the intended use. A thickness of the thermal insulator **10** (dimension thereof in a stacking direction of the aerogel layer 3 and the surface sheets 4) can be appropriately determined in accordance with desired thermal insulating properties and the intended use, and may be in a range of 0.1 to 100 mm.

The aerogel layer **3** is formed by bonding the plurality of aerogel particles 1 by gluing together with the at least one adhesive portion **2.** From the point of view of reducing the thermal conduction, it is preferable that the adhesive portion **2** have comparatively small thermal conductivities. From the point of view of increasing the reinforcing effect, it is preferable that the adhesion strength of the adhesive portion **2** be excellent. It is preferable that part of the adhesive portion **2** be prevented from intruding into fine pores of the aerogel particles 1. When part of the adhesive portion **2** intrudes into fine pores of the aerogel particles **1,** this intruding part of the adhesive portion **2** may increase the thermal conductivities of the aerogel particles **1** to cause deterioration in thermal insulating properties.

As illustrated in FIGS. 1A and 1B, adjacent aerogel particles 1 are bonded to each other with the at least one adhesive portion **2** so that the at least one adhesive portion **2** is in a branched shape. Air-gaps (air layers) formed between adjacent aerogel particles **1** are designated by the reference sign **15.** As illustrated in FIG. 1B, with regard to a section of the thermal insulator **10,** the adhesive portion **2** is deformed to be branched like a tree, and finally the adhesive portion **2** is in a branched shape. The adhesive portion **2** in a branched shape is formed so as to include at least one branching structure section that extends over surfaces of at least three aerogel particles **1.**

The maximum length of a contact surface of the adhesive portion **2** which is in contact with a surface of the aerogel particle 1 is preferably smaller than the maximum particle size (the maximum length) of the aerogel particle **1** to which this adhesive portion **2** adheres. It is preferable that the adhesive portions **2** in a branched shape be spaced at intervals so as not to be in contact with each other. As a result, the surface of the aerogel particle **1** is not likely to be covered with the adhesive portion **2.** Specifically, the maximum length of the contact surface of the adhesive portion **2** in contact with the surface of the aerogel particle **1** may depend on the size of aerogel particle **1,** however, is preferably in a range of **1** to 1000 µm. A contact surface area between the aerogel particle **1** and the adhesive portion **2** is preferably 5 to 60% of an entire surface area of the aerogel particle **1,** and more preferably, is 10 to 40% of that. Within this range, a bond between adjacent aerogel particles **1** and **1** can be less likely to weaken, strength of the thermal insulator **10** can be less likely to reduce, and reduction in thermal insulating properties of the thermal insulator **10** caused by the adhesive portion **2** can be decreased.

In the thermal insulator **10** of the present invention, the plurality of aerogel particles **1** are bonded with the at least one adhesive portion **2** in a branched shape. Therefore, adjacent aerogel particles **1** are bonded in a surface contact (surface connection) manner. Accordingly, it is possible to minimize the transfer of heat between the aerogel particles 1 and 1 via the adhesive portion **2.** As a result, the bond between the aerogel particles 1 and 1 by the adhesive portion **2** can be improved, and nevertheless the reduction in thermal insulating properties can be minimized.

The adhesive for forming the adhesive portion **2** may include thermosetting resin. Specifically, it is preferable that the adhesive for forming the adhesive portion **2** include therein thermosetting resin such as phenolic resin, melamine resin, urea resin, amine-cured type epoxy resin and the like. In order to increase strength while keeping the high thermal insulating properties, it is preferable to use the adhesive for forming the adhesive portion **2** which includes thermosetting resin having high flexibility. For example, in a case of using a rubber-modified, cashew-modified, or epoxy-modified phenolic resin, it is possible to increase the strength without deteriorating the thermal insulating properties. In the present embodiment, the expression "high flexibility" means that a tan δ measured by the dynamic viscoelasticity measuring method is large and a crosslink density is low.

The SP value of the adhesive for the adhesive portion **2** in a molten state (solubility parameter) is preferably equal to or more than 11. If the SP value of the adhesive for the adhesive portion **2** in a molten state is less than 11, the adhesive for the adhesive portion **2** in a molten state is likely to exist as particles on the surface of the aerogel particle, and thus the adhesive portion **2** in a branched shape is less likely to be formed. The SP value of the adhesive for forming the adhesive portion **2** in a molten state was calculated from a molecular structure of the adhesive for forming the adhesive portion **2** obtained based on the group contribution method.

A method for producing a thermal insulator of the present embodiment is a method for producing a thermal insulator by bonding the plurality of aerogel particles 1 with the at least one adhesive portion. Surfaces of the plurality of aerogel particles **1** are hydrophobic, the adhesive for forming the at least one adhesive portion **2** is powder and contains thermosetting resin, and a solubility parameter of the adhesive for forming the at least one adhesive portion **2** in a molten state is equal to or more than 11. The method of the present embodiment includes: mixing the plurality of aerogel particles 1, the adhesive for forming the at least one adhesive portion **2** and a surfactant; and thereafter curing the adhesive for forming the at least one adhesive portion **2** so that the plurality of aerogel particles are bonded with the at least one adhesive portion.

In the method of the present embodiment, preferably, an average particle size of the aerogel particles **1** is equal to or more than 100 µm.

In the method of the present embodiment, preferably, a surfactant is fixed to the surfaces of the plurality of aerogel particles.

In the method of the present embodiment, preferably, 5 to 40 parts by mass of the adhesive for forming the at least one adhesive portion **2** is added per 100 parts by mass of the plurality of aerogel particles.

Specifically, the thermal insulator **10** described above may be produced in the following manner.

Firstly, the surfaces of aerogel particles **1** are treated with a surfactant. The surfaces of aerogel particles **1** are modified by a surface preparation agent having the SP value of around 6, and thus are hydrophobic. However, the surfaces are treated with the surfactant, and therefore it is possible to facilitate adhesion of the adhesive for forming the adhesive portion 2 having hydrophilicity to the aerogel particles.

The surfactant may be, for example, an anion-based surfactant, a non-ion-based surfactant, a cation-based surfactant, an amphoteric ion-based surfactant, or the like. The anion-based surfactant may be selected from, for example, fatty acid salts, alpha-sulfo-fatty acid ester salts, alkyl benzene sulfonate, alkyl sulfate salts, triethanolamine alkyl sulfate and the like. The non-ion-based surfactant may be selected from, for example, fatty acid diethanolamide, polyoxyethylene alkyl ether, polyoxyethylene alkyl phenyl ether and the like. The cation-based surfactant may be selected from, for example, alkyltrimethylammonium salt, dialkyl dimethyl ammonium chloride, alkyl pyridinium chloride and the like. The amphoteric ion-based surfactant may be, for example, alkylcarboxybetaine or the like. Specifically, the trade names of such surfactants may be "Disperbyk (registered trademark) - 193", "Disperbyk - 192", "Disperbyk - 187", "BYK (registered trademark) - 154" and "BYK - 151", available from BYK JAPAN KK. In the present embodiment, the various surfactants described above may be used alone or in combination.

It is preferable that 0.1 to 20 parts by mass of the surfactant is added per 100 parts by mass of the aerogel particles **1.** Within this range, the surfaces of aerogel particles **1** can be evenly treated with the surfactant more easily, and also an excessive amount of the surfactant which means an amount of the surfactant unattached to the surfaces of aerogel particles 1 can be reduced. In treating the surfaces of aerogel particles **1** with the surfactant, the aerogel particles 1 and the surfactant may be mixed and stirred. Therefore, the surfactant can be attached and fixed to the surfaces of aerogel particles 1.

Next, the aerogel particles **1** and the adhesive for forming the adhesive portion **2** are mixed. It is preferable that the adhesive for forming the adhesive portion **2** be powder at ordinary temperature. In this case, it becomes easy to mix the aerogel particles **1** and the powder adhesive for forming the adhesive portion **2** uniformly. It is preferable that an average value of particle sizes (dimensions) of the powder adhesive for forming the adhesive portion **2** be smaller than an average value of particle sizes (dimensions) of the aerogel particles **1.** In this case, it becomes easy to mix the aerogel particles **1** and the powder adhesive for forming the adhesive portion **2** uniformly. Note that, the average particle size of the powder adhesive for forming the adhesive portion **2** and the average particle size of the aerogel particles **1** are each defined based on a diameter of a true circle having the same area as a section of a particle. The average particle size of the powder adhesive for forming the adhesive portion **2** and the average particle size of the aerogel particles **1** can be calculated from a sectional area of a particle of the powder adhesive for forming the adhesive portion **2** and a sectional area of an aerogel particle **1** which are measured by the X-ray CT, respectively. For example, it is possible to use an average value of diameters of true circles having the same areas as sections of 100 particles of the adhesive for forming the adhesive portion **2,** and an average value of diameters of true circles having the same areas as sections of 100 particles of the aerogel particles **1.** It is considered that, in mixing the aerogel particles **1** and the surfactant described above, the powder adhesive for forming the adhesive portion **2** is also mixed at the same time. However, to facilitate treatment of the surface of the aerogel particle 1 with the surfactant, it is preferable that the aerogel particle **1** and the surfactant be mixed before the powder adhesive for forming the adhesive portion **2** is mixed with them.

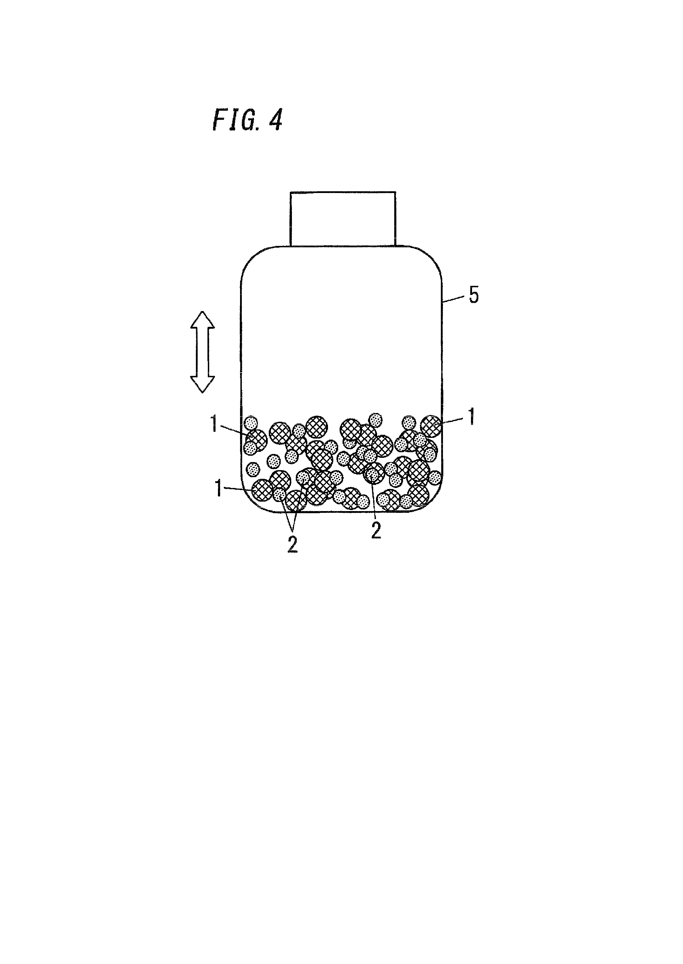

As shown in FIG. 4, to attach the adhesive for forming the adhesive portion **2** to the aerogel particles **1,** the aerogel particles **1** and the powder adhesive for forming the adhesive portion **2** are firstly put in a bottle **5,** the bottle **5** is then sealed off by, for example, closing a lid thereof, and thereafter the bottle **5** is shaken. By doing so, the aerogel particles **1** and the adhesive for forming the adhesive portion **2** are mixed in a powder level, and thereby the aerogel particles **1** to which particles of the adhesive for forming the adhesive portion **2** are attached can be obtained. In the manufacturing stage, they can be mixed in a powder level by use of an appropriate powder mixing device such as a mill and a mixer. However, a strong stirring force possibly causes destruction of the particles, and therefore it is preferably that they be mixed under a stirring force not causing particle destruction. The content ratio of the aerogel particles **1** to the adhesive for forming the adhesive portion **2** is appropriately determined in consideration of the types of the adhesive for forming the adhesive portion **2** and/or the thermal insulating property and the strength of the thermal insulator **10.** For example, it is possible to mix 100 parts by mass of the aerogel particles **1** with 5 to 40 parts by mass of the adhesive for forming the adhesive portion **2.** A decrease in the adhesive for forming the adhesive portion **2** may cause a decrease in the thermal conductivity of the thermal insulator **10** and also may cause a great decrease in the strength of the thermal insulator **10.** It is therefore preferable that the thermal insulator include 10 to 20 parts by mass of the adhesive for forming the adhesive portion **2** per 100 parts by mass of the aerogel particles **1.** The density of the thermal insulator **10** significantly affects the thermal insulating property. The density of the thermal insulator **10** can be determined in consideration of prepared amounts of the aerogel particles **1** and the adhesive for the adhesive portion **2,** and the thickness of the thermal insulator **10.** A decrease in the density of the thermal insulator **10** would lead to deterioration in the thermal insulating property because air layers may be formed inside the thermal insulator **10,** and also an increase in the density thereof would lead to a decrease in the thermal conductivity because the adhesive portions **2** is likely to act as thermal bridges. In an example of the thermal insulator **10** which is produced under a condition where **17** parts by mass of the adhesive for forming the adhesive portion **2** is added per 100 parts by mass of the aerogel particles 1, the density of a board preferably falls within a range of 0.13 to 0.21 g/cm³.

Thereafter, the aerogel particles **1** to which the adhesive for forming the adhesive portion **2** is attached are molded with heat and pressure. By this molding process, it is possible to obtain the thermal insulator **10** which is shaped and in which the aerogel particles **1** are bonded with the adhesive portion **2.** In the molding process with heat and pressure described above, the adhesive for forming the adhesive portion **2** is heated so that the thermosetting resin included therein is melted by the heat, and thereafter the adhesive for forming the adhesive portion **2** is further heated so as to bond the aerogel particles **1** and then is cured. In the case of using the powder adhesive for forming the adhesive portion **2** with high polarity, the adhesive for forming the adhesive portion **2** melted on the surfaces of aerogel particles **1** are repelled and the area of the adhesive surface becomes small. Hence, the strength of the thermal insulator **10** is liable to decrease. On the other hand, in the present embodiment, by blending the surfactant, the adhesive for forming the adhesive portion **2** in a molten state can be concentrated at close parts of the surfaces of the adjacent aerogel particles **1.** After that, the adhesive for forming the adhesive portion **2** is cured, and thereby the aerogel particles **1** can be bonded by the adhesive portion **2** with a branched shape.

As shown in FIGS. 5A to 5C, a pressing machine **30** is used for the molding process. The pressing machine **30** includes a press lower mold **31** and a press upper mold **32.** Firstly, as shown in FIG. 5A, a side wall mold **31b** is attached to the press lower mold **31** so as to form a recess **31a**. A release sheet **34** is put on a bottom face of the recess **31a,** and a surface sheet **4** is then put thereon. Next, the aerogel particles **1** are introduced from the bottle **5** into the recess **31a** above the press lower mold **31.** Note that, the adhesive for forming the adhesive portion **2** is not shown in FIGS. 5A to 5D, but the aerogel particles **1** to which the adhesive for forming the adhesive portion **2** is attached are used for this process. Thereafter, as shown in FIG. 5B, a top plane of the introduced particles is flattened by a smoother **33** such as a medicine spoon, a paddle and the like. An additional surface sheet **4** is put on the aerogel particles 1 of which the top plane is flattened, and thereafter an additional release sheet 34 is put thereon. Thereafter, the press upper mold **32** is introduced into the recess **31a** from an upper side, and then pressing is conducted with heat and pressure, as shown in FIG. 5C. Preferably, the pressing is conducted under a pressing force that does not cause crushing or destruction of the aerogel particles **1.** By this pressing, the adhesive for forming the adhesive material **2** exerts the adhesive properties and thus the aerogel particles 1 are bonded to be integrated. Moreover, each of the surface sheets **4** is glued to the aerogel particles 1 by the adhesion by the adhesive for forming the adhesive portions **2** and thus the surface sheets **4** are integrated with the molded product of the aerogel particles **1.** After completion of pressing, the resultant product is taken out therefrom, and dried by a drying machine. As a result, the thermal insulator 10 constituted by the molded product of the aerogel particles 1 (aerogel layer 3) and the surface sheets **4** is formed, as shown in FIG. 5D.

The thermal conductivity of the thermal insulator **10** is preferably equal to or less than 25 mW/(m ·K). If the thermal conductivity of the thermal insulator **10** is more than this value, the thermal insulating properties of the thermal insulator **10** may be deteriorated. Since the thermal conductivity of the thermal insulator **10** is preferably low, a lower limit of the thermal conductivity is not set.

### EXAMPLES

Hereinafter, the present invention will be explained specifically with reference to Examples.

### (Example 1)

### [Method of synthesizing silica aerogel particles]

Used were tetramethoxysilane oligomer ("Methyl Silicate 51", available from COLCOAT CO., Ltd, of which average molecular weight is 470) as alkoxysilane, ethanol (special grade reagent, available from nacalai tesque, inc.) and water as solvent, and aqueous ammonia of 0.01 mol/l as catalyst. The tetramethoxysilane oligomer, the ethanol, the water and the aqueous ammonia were mixed at a molar ratio of 1:120:20:2.16 to produce a sol reaction liquid. Thereafter, the sol reaction liquid was left at ordinary temperature to be gelled to produce a gelled compound.

The gelled compound was then put in a pressure proof vessel filled with liquefied carbon dioxide with the temperature of 18°C and the pressure of 5.4 MPa (55 kgf/cm²), and replacement of the ethanol in the gelled compound by carbon dioxide was conducted for three hours. Thereafter, the temperature and the pressure of the inside of the pressure proof vessel were adjusted to fulfill a supercritical condition of carbon dioxide where the temperature is 80°C and the pressure is 15.7 MPa (160 kgf/cM²), and then removal of the solvent was conducted for 48 hours. 0.3 mol/l of hexamethyldisilazane as hydrophobizating agent was added to the atmosphere under the supercritical condition, and the hydrophobizating agent was dispersed in the supercritical fluid for two hours, and the gelled compound was remained in the supercritical fluid to be hydrophobized. Thereafter, supercritical carbon dioxide was drained and the pressure of the inside of the vessel was reduced, and thereby the ethanol and the hydrophobizating agent were removed from the gelled compound. It took 15 hours from the time of start of adding the hydrophobizating agent to the time of completion of reducing the pressure. The silica aerogel particles were taken out of the pressure proof vessel. The silica aerogel particles had a bulk density of 0.086 g/cm³, and an average particle size of 1 mm. The average particle size was obtained from diameters of true circles with the same areas as sections of 100 particles of the silica aerogel particles measured with the X-ray CT.

"Pluronic 84" (nonionic surfactant, polyoxyethylene alkyl ether), available from BASF Japan Ltd., was used as a surfactant. 1.0 mass % of the surfactant (0.18 g) was added to and mixed with 18 g of silica aerogel particles synthesized in the method described above. By doing so, the surfactant was attached and then fixed to the surfaces of the aerogel particles.

### [Method of forming thermal insulator]

18 g of the silica aerogel particles treated with the surfactant and 3 g of powder adhesive (average particle size of 50 µm) of phenolic resin ("Kf6004", available from ASAHI ORGANIC CHEMICALS INDUSTRY CO. LTD.) for forming the adhesive, were stirred with a disper so as to homogeneously mix them. Thereafter, the resultant mixture of the silica aerogel particles and the adhesive was put in a mold having the length of 120 mm, the width of 120 mm, and the thickness of 10 mm, and was subject to pressing molding to cure the adhesive, and thereby the mixture was molded into a desired size. The pressing molding was performed under a condition where a mold temperature was 180°C, a pressing pressure was 0.98 MPa (10 kgf/cm²), and a pressing time was 60 minutes. Consequently, a thermal insulator was obtained.

### (Example 2)

### [Method of synthesizing silica aerogel particles]

Silica aerogel particles were obtained in the same manner as Examples 1.

### [Treatment with surfactant]

"Disperbyk - 192" (nonionic surfactant), available from BYK JAPAN KK, was used as the surfactant. 1.5 mass % of the surfactant (0.27 g) was added to and mixed with 18 g of the silica aerogel particles synthesized in the method described above. By doing so, the surfactant was attached and then fixed to the surfaces of the aerogel particles.

### [method of forming thermal insulator]

The thermal insulator was obtained in the same manner as Example 1.

### (Example 3)

### [Method of synthesizing silica aerogel particles]

The silica aerogel particles were obtained in the same manner as Example 1.

### [Treatment with surfactant]

"Disperbyk - 154" (cationic surfactant), available from BYK Japan KK, was used as the surfactant. 1 mass % of the surfactant (0.38 g) was added to and mixed with 18 g of the silica aerogel particles synthesized in the method described above. By doing so, the surfactant was attached and then fixed to the surfaces of the aerogel particles.

### [Method of forming thermal insulator]

The thermal insulator was obtained in the same manner as Example 1.

### (Example 4)

### [Method of synthesizing MTMS-based silica aerogel particles]

1.00 g of cetyltrimethylammonium bromide (also known as hexadecyltrimethylammonium bromide, available from NACALAI TESQUE, INC., hereinafter abbreviated as "CTAB") was dissolved in 10.00 g of 0.01 mol/L of acetic acid solution, and thereafter 0.50 g of urea (available from NACALAI TESQUE, INC.) was further dissolved therein. 5.0 ml of methyl trimethoxy silane as a silicon compound ("LS-530" (specific gravity: 0.95), available from Shin-Etsu Chemical Co., Ltd., hereinafter abbreviated as "MTMS") was added in this acidic solution, and thereafter was stirred and mixed for 30 minutes to generate sol by hydrolysis reaction of MTMS. Then, the generated sol was left in a sealed bottle at 60°C for causing gelation, and thereafter successively left for 96 hours to obtain a gel compound by aging gel, and thereafter the substitution of the solvent was conducted. After the gel compound was immersed in water firstly, the replacement of solvent was carried out at 60°C for 12 hours. Next, after the gel compound was immersed in methanol, the first replacement of solvent was carried out at 60°C for 2 hours. In the second or subsequent replacement of solvent, methanol was replaced by new one, and then the replacement of solvent was carried out at 60°C for 6 hours two times. The second or subsequent replacement of solvent was repeated three times.

The gelled compound was then put in a pressure proof vessel filled with liquefied carbon dioxide with the temperature of 18°C and the pressure of 5.4 MPa (55 kgf/cm²), and then replacement of the ethanol in the gelled compound by carbon dioxide was carried out for three hours. Thereafter, the temperature and the pressure of the inside of the pressure proof vessel were adjusted to fulfill a supercritical condition of carbon dioxide where the temperature is 80°C and the pressure is 15.7 MPa (160 kgf/cm²), and then removal of the solvent was conducted for 48 hours to obtain the silica aerogel particles. The silica aerogel particles had a bulk density of 0.10 g/cm³, and an average particle size of 1000 µm. The average particle size was obtained from diameters of true circles with the same areas as sections of 100 particles of the silica aerogel particles measured with the X-ray CT.

### [Treatment with surfactant]

"Pluronic 84" (nonionic surfactant, polyoxyethylene alkyl ether), available from BASF Japan Ltd., was used as the surfactant. 1.0 mass % of the surfactant (0.18 g) was added to and mixed with 18 g of MTMS-based silica aerogel particles synthesized in the method described above. By doing so, the surfactant was attached and then fixed to the surfaces of the aerogel particles.

### [Method of forming thermal insulator]

18 g of MTMS-based silica aerogel particles treated with the surfactant and 3 g of the powder adhesive (average particle size of 50 µm) of phenolic resin ("Kf6004", available from ASAHI ORGANIC CHEMICALS INDUSTRY CO. LTD.) for forming the adhesive, were stirred with a disper so as to homogeneously mix them. Thereafter, the resultant mixture of the silica aerogel particles and the adhesive was put in a mold having the length of 120 mm, the width of 120 mm, and the thickness of 10 mm, and was subject to pressing molding to cure the adhesive, and thereby the mixture was molded into a desired size. The pressing molding was performed under a condition where a mold temperature was 180°C, a pressing pressure was 0.98 MPa (10 kgf/cm²), and a pressing time was 60 minutes. Consequently, a thermal insulator was obtained.

### (Comparative Example 1)

Comparative Example 1 was different from Example 1 in that the surfactant was not used. In other words, the thermal insulator was produced in the same manner as Example 1 except the above point.

### (Comparative Example 2)

18 g of the silica aerogel particles without treatment by the surfactant and 10 g of acrylic resin-based adhesive (Vinyblan 2500E) for forming the adhesive, were stirred with a disper for 3 minutes so as to homogeneously mix them. The resulting water-containing mixture was left for 1 hour at 80°C with a drier to remove water. Thereafter, the resultant mixture of the silica aerogel particles and the adhesive was put in a mold having the length of 120 mm, the width of 120 mm, and the thickness of 10 mm, and was subject to pressing molding to cure the adhesive, and thereby the mixture was molded into a desired size. The pressing molding was performed under a condition where a mold temperature was 180°C, a pressing pressure was 0.98 MPa (10 kgf/cm²), and a pressing time was 60 minutes. Consequently, a thermal insulator was obtained.

### (Comparative Example 3)

Comparative Example 3 was different from Comparative Example 1 in that MTMS-based silica aerogel particles according to Example 4 were used as aerogel particles. In other words, the thermal insulator was produced in the same manner as Comparative Example 1 except the above point.

### (Comparative Example 4)

Comparative Example 4 was different from Comparative Example 2 in that MTMS-based silica aerogel particles according to Example 4 were used as aerogel particles. In other words, the thermal insulator was produced in the same manner as Comparative Example 2 except the above point.

The strength and the thermal conductivity were measured for each of the thermal insulators of Examples 1 to 4 and Comparative Examples 1 to 4 described above. The strength was measured in accordance with JIS K7221. The symbol "○" denotes that the strength is more than 0.1 MPa, and the symbol "×" denotes that the strength is equal to or less than 0.1 MPa. The thermal conductivity was measured in accordance with JIS A1412. The results are shown in Table 1.

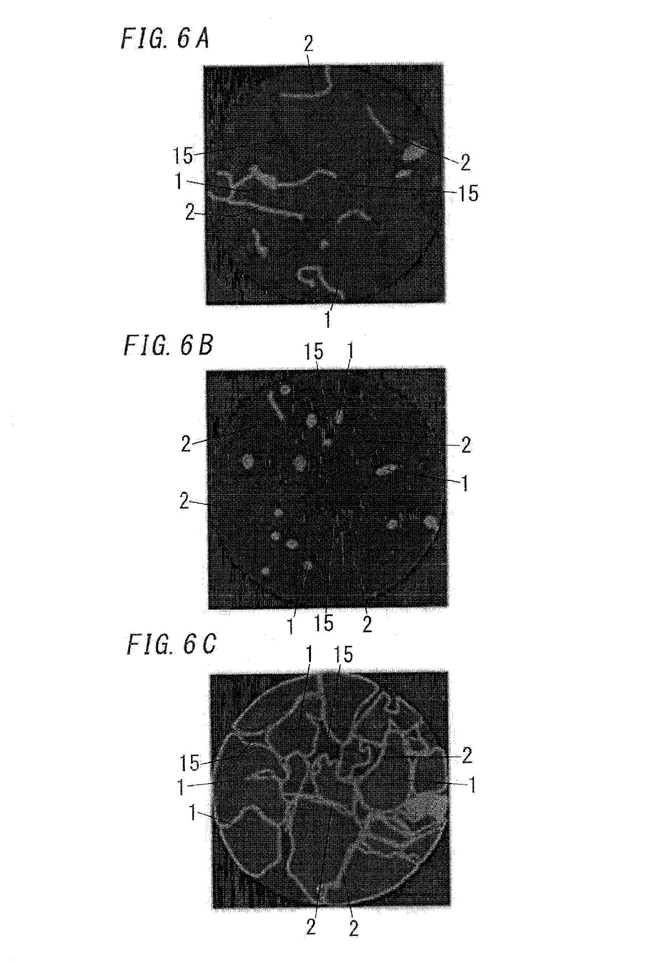

Further, FIG. 6A shows an X-ray CT (computed tomography) image of the thermal insulator according to Example 1, FIG. 6B shows an X-ray CT image of the thermal insulator according to Comparative Example 1, and FIG. 6C shows an X-ray CT image of the thermal insulator according to Comparative Example 2.

**[Table 1]**

| | Strength (MPa) | Thermal Conductivities (mW/m·K) |
|---|---|---|
| Example 1 | ○ | 16.3 |
| Example 2 | ○ | 16.8 |
| Example 3 | ○ | 16.2 |
| Example 4 | ○ | 17.1 |
| Comparative Example 1 | × | 15.3 |
| Comparative Example 2 | ○ | 17.7 |
| Comparative Example 3 | ×(not cured) | - |
| Comparative Example 4 | ○ | 19.0 |

In Example 1, the silica aerogel particles were treated with the surfactant. In contrast, in Comparative Example 1, the silica aerogel particles were not treated with the surfactant. Thus, Example 1 is higher in the strength than Comparative Example 1. Further, in Example 1, the silica aerogel particles were treated with the surfactant, the adhesive was powder, and 16.7 parts by mass of the adhesive was added per 100 parts by mass of the silica aerogel particles. On the other hand, in Comparative Example 2, the silica aerogel particles were not treated with the surfactant, the adhesive aqueous solution was used, and 55.6 parts by mass of the adhesive aqueous solution was added per 100 parts by mass of the silica aerogel particles. Thus, Example 1 is lower in the thermal conductivity than Comparative Example 2.

Examples 2 and 3 are different in a type of the surfactant from Example 1, but are higher in the strength than Comparative Example 1, and are lower in the thermal conductivity than Comparative Example 2.

Example 4 in which the MTMS-based silica aerogel particles are used shows a similar performance to Example 1. In fact, in Example 4, the MTMS-based silica aerogel particles were treated with the surfactant. In contrast, in Comparative Example 3, the silica aerogel particles were not treated with the surfactant. Thus, Example 1 is higher in the strength than Comparative Example 3. Further, in Example 4, the silica aerogel particles were treated with the surfactant, the adhesive was powder, and 16.7 parts by mass of the adhesive was added per 100 parts by mass of the silica aerogel particles. On the other hand, in Comparative Example 4, the silica aerogel particles were not treated with the surfactant, the adhesive aqueous solution was used, and 55.6 parts by mass of the adhesive aqueous solution was added per 100 parts by mass of the silica aerogel particles. Thus, Example 4 is lower in the thermal conductivity than Comparative Example 4.

Consequently, Examples 1 to 4 have a good balance of the strength and the thermal insulating property compared with Comparative Examples 1 to 4.

### REFERENCE SIGNS LIST

- 1: aerogel particle
- 2: adhesive
- 10: thermal insulator

## Claims

1. A thermal insulator formed by bonding a plurality of aerogel particles with at least one adhesive portion,
surfaces of the plurality of aerogel particles being hydrophobic,
the surfaces of the plurality of aerogel particles being treated with a surfactant, and
the at least one adhesive portion having a branching structure section that extends over surfaces of at least three of the plurality of aerogel particles.

2. A method for producing a thermal insulator by bonding a plurality of aerogel particles with at least one adhesive portion,
surfaces of the plurality of aerogel particles being hydrophobic,
adhesive for forming the at least one adhesive portion being powder and including thermosetting resin,
a solubility parameter of the adhesive in a molten state being equal to or more than 11, and
the method comprising:
mixing the plurality of aerogel particles, the adhesive and a surfactant; and
thereafter curing the adhesive so that the plurality of aerogel particles are bonded with the at least one adhesive portion.

3. The method for producing a thermal insulator according to claim 2, wherein
an average particle size of the plurality of aerogel particles is equal to or more than 100 µm.

4. The method for producing a thermal insulator according to claim 2 or 3, wherein
the surfactant is fixed to the surfaces of the plurality of aerogel particles.

5. The method for producing a thermal insulator according to any one of claims 2 to 4, wherein
5 to 40 parts by mass of the adhesive is added per 100 parts by mass of the plurality of aerogel particles.
